# EUROPÄISCHE PATENTSCHRIFT

(11) **EP 0 716 534 B1**
(45) Veröffentlichungstag und Bekanntmachung des Hinweises auf die Patenterteilung: **27.11.2002**
(21) Anmeldenummer: 95116683.4
(22) Anmeldetag: 23.10.1995
(51) Int. Cl.: H04M 17/02, G06K 7/00

(54) **Einrichtung zum Lesen von Wertkarten**
Credit cards reading device
Dispositif de lecture de cartes de crédit

(30) Priorität: 06.12.1994 CH 368894
(43) Veröffentlichungstag der Anmeldung: 12.06.1996
(73) Patentinhaber: IPM International SA, 1211 Genève 16 (CH)
(72) Erfinder: Doucet, Joel, F-07130 Soyons (FR); Daumas, Guy, F-07300 Tournon (FR); Cocquempot, Pascal, F-26120 Montmeyran (FR)
(74) Vertreter: Wenger, Joel-Théophile

(56) Entgegenhaltungen:
- EP-A- 0 274 302
- DE-A- 4 107 544
- DE-A- 4 235 021
- GB-A- 2 077 013
- US-A- 4 837 814
- PATENT ABSTRACTS OF JAPAN vol. 13 no. 73 (P-830) ,20.Februar 1989 & JP-A-63 257812 (N.T.T.)

## Beschreibung

Die Erfindung bezieht sich auf eine Einrichtung zum Lesen von Wertkarten gemäß dem Oberbegriff des Anspruchs 1.

Solche Einrichtungen werden vorteilhaft in Dienstleistungsautomaten zur Abgeltung einer bezogenen Dienstleistung verwendet. Eine bei der Abgeltung verwendete Wertkarte ist eine Kreditkarte oder eine vorbezahlte Wertkarte mit magnetisch oder optisch lesbarer Information oder auch eine sogenannte Chipkarte. Als Beispiel einer Wertkarte seien Kredit- oder Chipkarten der Norm ISO 7811 bzw. ISO 7816 genannt.

Es ist ein Einrichtung dieser Art bekannt (EP 0 218 504 bzw. DE-A-4 235 021), bei der sowohl magnetisch kodierte Wertkarten wie auch Chipkarten lesbar sind. Die Einrichtung verfügt über eine Transporteinrichtung, durch welche die Karte zum Lesen bzw. Verändern vollständig in ein Gehäuse eingezogen wird. Die Einrichtung hat den Nachteil, daß die Karte bei einer Störung der Transporteinrichtung nicht mehr selbsttätig ausgegeben werden kann.

Aus der EP-A-0 274 302 ist eine Einrichtung zum Lesen von Chipkarten bekannt, die Einbuchtungen am Gehäuse im Bereich der Einschuböffnung der Wertkarte aufweist, so daß die Wertkarte außerhalb des Gehäuses auch bei eingeschobener Wertkarte greifbar ist.

Aus der US 4 837 814 ist eine Einrichtung zum Lesen von magnetischen Wertkarten bekannt, wobei eine an der Gehäusefront vorstehende Aufnahme derart gestaltet wird, daß die Wertkarte auch im eingeschobenen Zustand noch mit der Hand greifbar ist.

Weiter ist eine Einrichtung bekannt (A. Deyhle: New Multisard Payphone System in Netherlands, SWISSCOM global magazine, 2/93), mit der sowohl optisch codierte Wertkarten wie auch Chipkarten lesbar sind. Eine Gehäusefront der Einrichtung weist einen Schlitz zum Einschieben der Karte und im Bereich des Schlitzes weiter eine kugelkappenförmige Einbuchtung auf. Während einer Behandlung der Karte in der Einrichtung ist die Karte im Bereich der Einbuchtung für einen Benutzer immer greifbar. Ein magnetischer Lese-/Schreibkopf für magnetisch kodierte Karten ist in der Einrichtung nicht einbaubar, da die kugelkappenförmige Einbuchtung bei funktionsgerechter Auslegung einen derart grossen Durchmesser aufweist, dass der magnetische Lese-/Schreibkopf nicht mehr im Bereich einer magnetisierten Zone über der Karte montierbar ist.

Der Erfindung liegt die Aufgabe zugrunde, eine Einrichtung anzugeben, bei der eine Karte während einer Behandlung in der Einrichtung für einen Benutzer der Karte immer greifbar ist, aber nicht störend nach außen im Wege steht.

Die genannte Aufgabe wird erfindungsgemäß durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnungen näher erläutert.

Es zeigen:
- Fig. 1: ein Kartentelefon mit einer Einrichtung zum Lesen einer Wertkarte,
- Fig. 2: ein prinzipieller Aufbau der Einrichtung und
- Fig. 3: eine in die geschnittene Einrichtung eingeschobene Wertkarte.

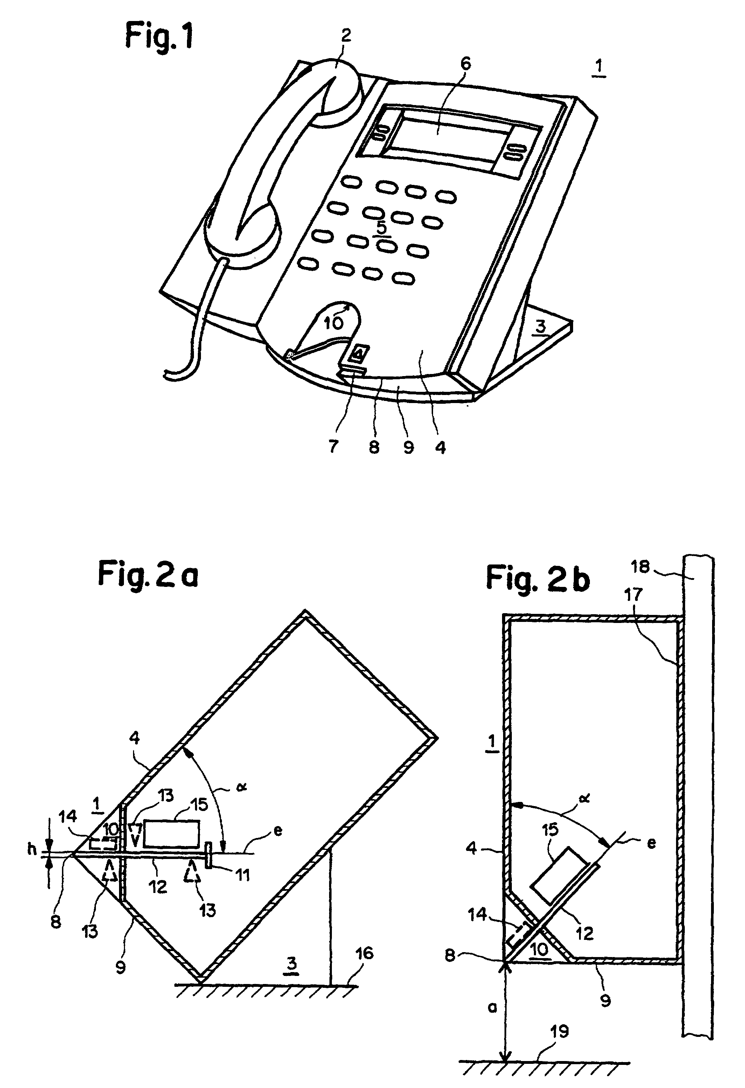

In der Fig. 1 verfügt ein Kartentelefon über ein Gehäuse 1 und einen Hörer 2. Das Gehäuse 1 wird von einem Sockel 3 in einer Schräglage gehalten und weist eine Frontplatte 4 auf, an der eine Tastatur 5 und eine Anzeigeeinheit 6 angeordnet sind. Eine schlitzförmige Öffnung 7 zum Aufnehmen einer Wertkarte führt von einer Kante 8 des Gehäuses 1 aus in den Innenraum des Gehäuses 1. Die Kante 8 ist eine Übergangsstelle zwischen zwei zueinander geneigten Wänden oder Wandpartien des Gehäuses 1. Die Kante 8 ist vorteilhafterweise die Übergangsstelle der Frontplatte 4 zu einer an die Frontplatte 4 angrenzenden Gehäusewand 9. Im Bereich der Öffnung 7 ist am Gehäuse 1 - an der Frontplatte 4 und an der Gehäusewand 9 - eine Einbuchtung 10 ausgebildet, in welcher eine eingeschobene Wertkarte 12 für einen Benutzer der Wertkarte 12 mit Fingern greifbar ist. Ein im Innenraum des Gehäuses 1 angeordneter Anschlag begrenzt die Eindringtiefe der Wertkarte in den Innenraum derart, dass das äussere Ende der vollständig eingeschobenen Wertkarte ungefähr bündig mit der Kante 8 ist.

Die Fig. 2a zeigt eine Schnittdarstellung des Gehäuses 2 mit einer bis zu einem mechanischen Anschlag 11 eingeschobenen Wertkarte 12, welche die Materialdicke h aufweist. Die Wehtkarte 12 ist durch Führungsmittel 13 in einer Ebene e positioniert, welche mit der Frontplatte 4 - bzw. mit einer weiteren Ebene, in welcher die Frontplatte 4 im wesentlichen liegt - einen gewissen Neigungswinkel α einschliesst. Der Neigungswinkel α ist vorteilhafterweise so gewählt, dass im Innenraum des Gehäuses eine Einheit 14 zum Lesen und/oder Verändern eines magnetischen Codes auf der Werticarte 12 funktionsgerecht angeordnet werden kann. Im weiteren ist im Innenraum des Gehäuses eine Einheit 15 zur Kommunikation mit einem in der Wertkarte integrierten Baustein angeordnet, der beispielsweise ein Speichermedium oder ein Mikroprozessor ist.

Der Sockel 3 hält das Gehäuse 4 gegenüber einer Tischplatte 16 in einer Schräglage, die so gerichtet ist, das die Wertkarte 12 bequem in das Gehäuse 4 einschiebbar ist.

In einer in der Fig. 2b dargestellten Variante der Einrichtung nach Fig. 2a weist das Gehäuse 1 eine Rückwand 17 auf, welche direkt an einer Zimmerwand 18 befestigbar ist. Das Gehäuse 1 ist in einem gewissen Abstand a oberhalb einer Standfläche 19 montiert, der ein ergonomisches Einschieben der Wertkarte 12 in der Ebene e erlaubt.

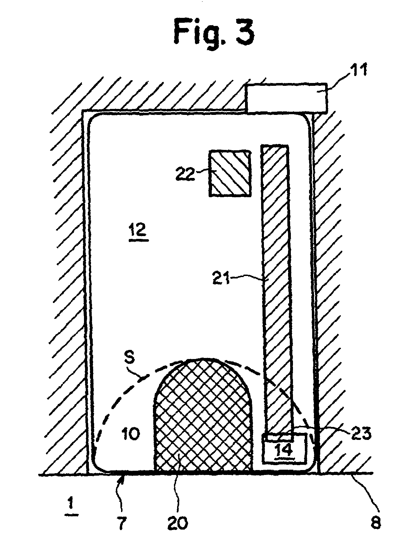

In der Fig. 3 ist die Wertkarte 12 bis zum Anschlag 11 in das Gehäuse 1 eingeschoben, wobei das äussere Ende der Wertkarte etwa bündig mit der Kante 8 ist. Durch die Einbuchtung 10 ergibt sich vorteilhafterweise eine in ihrer Form der Auflagefläche eines Daumenkuppens ähnliche Zone 20, in der die Wertkarte von zwei Seiten her mit Fingern greifbar ist. In der Fig. 3 ist die Zone 20 doppelt schraffiert dargestellt.

Dadurch, dass die Öffnung 7 etwa bei einer auf der Kante 8 liegenden Linie beginnt, und die Einbuchtung 10 ausgeführt ist, ist die Zone 20 der eingeschobene Wertkarte 12 vorteilhafterweise auch dann für einen Benutzer der Wertkarte 12 gut sichtbar, wenn die Öffnung 7 wesentlich ausserhalb der Augenhöhe des Benutzers liegt. Dies ist besonders vorteilhaft, wenn das Gehäuse 1 ein Teil einer Telefonstation ist, welche als Tischmodell (Fig. 1 und Fig. 2a) oder als Wandmodell (Fig. 2b) ergonomisch in einer Umgebung positionierbar ist.

Eine gewisser Typ der Wertkarte 12 weist ein Streifen 21 mit einer magnetisierbaren Schicht und/oder einen integrierten Baustein 22 auf.

Vergleichshalber zeigt eine gestrichelte Linie s den Verlauf einer auf einer Gehäusewand ausgeführten kugelkappenförmigen Zugriffszone gemäss dem Stand der Technik. Der Streifen 21 wäre nicht lesbar.

Dadurch, dass die Öffnung 7 von der Kante 8 aus in den Innenraum des Gehäuses 1 führt, ist der Neigungswinkel α auf vorteilhafte Art so wählbar, dass entweder zwischen der Wertkarte 12 und der Frontplatte 4 (Fig. 1) oder dann zwischen der Wertkarte 12 und der Gehäusewand 9 genügend Raum zur Anordnung der Einheit 14 verfügbar ist, durch die ein magnetischer Code im Streifen 21 bei einem Einschieben bzw. Herausziehen der Wertkarte 12 lesbar und/oder veränderbar ist. Die vorteilhafte Anordnung der Öffnung ermöglicht eine optimale Positionierung der Einheit 14 an einem gegen die Kante 8 hin liegenden Ende 23 des Streifens 21. Durch die optimale Positionierung der Einheit 14 ist der Streifen 21 durch die Einheit 14 in seiner ganzen Ausdehnung bearbeitbar.

## Patentansprüche

1. Einrichtung zum Lesen von Wertkarten, mit einem Gehäuse (1), das Führungsmittel (13) zur Führung einer Wertkarte (12), eine im wesentlichen schlitzförmige Öffnung (7) zum Einführen der Wertkarte (12) und eine Einbuchtung (10) im Bereich der Öffnung (7), in welcher die eingeschobene Wertkarte (12) von ausserhalb des Gehäuses (1) mit Fingern greifbar ist, sowie einen Anschlag (11) zur Begrenzung des Einführens der Wertkarte (12) in das Gehäuse (1) aufweist,
**dadurch gekennzeichnet,**
**daß** sich die Öffnung (7) im Bereich einer Kante (8) befindet, die durch zwei zueinander geneigte Wände (4; 9) des Gehäuses (1) gebildet ist, und daß der Anschlag (11) derart angeordnet ist, daß das äussere Ende der vollständig eingeschobenen Wertkarte (12) im wesentlichen bündig mit der Kante (8) ist, aber in der Einbuchtung (10) mit den Fingern greifbar bleibt.

2. Einrichung nach Anspruch 1,
**dadurch gekennzeichnet,**
**daß** die Führungsmittel (13) die Wertkarte (12) in einer Ebene (e) positionieren, die gegenüber einer weiteren Ebene, in welcher sich die Frontplatte (4) befindet, einen spitzen Winkel (α) einschließt.

3. Einrichtung nach Anspruch 2,
**dadurch gekennzeichnet,**
**daß** der spitze Winkel (α) so gewählt ist, daß innerhalb des Gehäuses (1) beiderseits der Einbuchtung (10) zwischen der eingeschobenen Wertkarte (12) und der Frontplatte (4) bzw. der Gehäusewand (9) Raum zur Anordnung einer Einheit (14) zum Lesen und/oder zum Verändern eines magnetischen Codes auf einem magnetischen Streifen (21) der Wertkarte (12) möglichst nahe der Kante (8) vorhanden ist.

4. Einrichtung nach einem der Ansprüche 1-3,
**dadurch gekennzeichnet,**
**daß** sich im Innenraum des Gehäuses (1) eine Einheit (14) zum Lesen und/oder zum Verändern eines magnetischen Codes auf einem magnetisierbaren Streifen (21) der Wertkarte (12) befindet und daß die Einheit (14) so ausgestattet ist, daß sie beim Einschieben bzw. Herausziehen der Wertkarte (12) in Funktion tritt.

5. Einrichtung nach einem der Ansprüche 2-4,
**dadurch gekennzeichnet,**
**daß** sich im Innenraum des Gehäuses (1) eine Einheit (15) zur Kommunikation mit einem in die Wertkarte (12) integrierten Baustein bei Positionierung der Wertkarte (12) in der Ebene (e) befindet.

6. Kartentelefon mit einer Einrichtung nach einem der vorhergehenden Ansprüche,
**dadurch gekennzeichnet,**
**daß** die Frontplatte (4) des Gehäuses derart positioniert ist, daß die eingeschobene Wertkarte (12) gut in der Einbuchtung (10) sichtbar ist, wenn sich die Öffnung (7) wesentlich außerhalb der Augenhöhe des Benutzers befindet.

## Claims

1. Device for reading phone-cards, with a housing (1), the guide means (13) for guiding a phone-card (12), a substantially slot-shaped opening (7) for introducing the phone-card (12) and an recess (10) in the area of the opening (7) in which the inserted phone-card (12) is at easy finger reach from outside the housing (1), as well as an abutment (11) for limiting the insertion of the phone-card (12) into the housing (1), **characterized in that** the opening (7) lies in the area of an edge (8) that is formed through two walls (4; 9) of the housing inclined towards each other, and that the abutment (11) is arranged in such a way that the external end of the completely inserted phone-card (12) is substantially aligned with the edge (8), but that it remains at easy finger reach in the recess (10).

2. Device according to claim 1, **characterized in that** the guide means (13) place the phone-card (12) in a plane (e) in such a way that it defines an acute angle (α) relative to a plane formed by the front plate (4).

3. Device according to claim 2, **characterized in that** the acute angle (α) is selected in such a way that, inside the housing (1) on both sides of the recess (10) between the inserted phone-card (12) and the front plate (4) or the housing wall (9), there is space as near as possible to the edge (8) for the arrangement of a unit (14) for reading and/or for changing of a magnetic code on a magnetic stripe (21) of the phone-card (12).

4. Device according to one of the claims 1 - 3, **characterized in that** in the interior of the housing (1), a unit (14) is located for reading and/or for changing a magnetic code lies on a magnetizable stripe (21) of the value card (12) and that the unit (14) is equipped in such a way that it comes into operation when inserting or removing the phone-card (12).

5. Device according to one of the claims 2 - 4, **characterized in that** in the interior of the housing (1) a unit (15) is located for the communication with a module integrated into the phone-card (12) and arranged in the plane (e) when positioning the phone-card (12) in the plane (e).

6. Phone-card with a device according to one of the preceding claims, **characterized in that** the front plate (4) of the housing is placed in such a way that the inserted phone-card (12) is well visible in the recess (10) although the opening (7) lies much outside the eye level of the user.

## Revendications

1. Un dispositif pour la lecture d'une carte téléphonique comprenant un boîtier (1), un moyen de guidage (13) pour guider une carte téléphonique (12), une ouverture en forme de fente (7) pour introduire la carte téléphonique (12) et un renfoncement (10) au niveau de l'ouverture (7) dans lequel la carte téléphonique insérée (12) est facile à atteindre hors du boîtier (1) avec le doigt, ainsi qu'un butoir (11) pour limiter l'insertion de la carte téléphonique (12) dans le boîtier (1),
**caractérisé par le fait que** l'ouverture (7) s'étend sur tout le bord (8), qui est formé par deux parois (4; 9) du boîtier reliées l'un vers l'autre, et en ce que le butoir (11) est disposé de telle façon que l'extrémité de la carte téléphonique complètement insérée (12) est substantiellement alignée avec le bord (8), restant facile à atteindre dans le renfoncement (10).

2. Dispositif suivant la revendication 1, **caractérisé par le fait que** le moyen de guidage (13) positionne la carte téléphonique (12) de manière à former un angle aigu (a) par rapport à un autre plan suivant généralement la face avant (4).

3. Dispositif suivant la revendication 2, **caractérisé par le fait que** l'angle aigu (α) est sélectionné de telle sorte que, dans le boîtier (1) de part et d'autre du renfoncement (10) entre la carte téléphonique insérée (12) et la plaque avant (4) ou la paroi du boîtier (9), est disposé une unité (14) pour la lecture et/ou changement d'un code magnétique sur une bande magnétique (21) de la carte téléphonique (12) aussi près que possible du bord (8).

4. Dispositif suivant une des revendications 1 - 3, **caractérisé par le fait que** dans la partie intérieure du boîtier (1) se trouve une unité (14) pour la lecture et/ou écriture d'un code magnétique sur une bande magnétique (21) de la carte de valeur (12) et en ce que l'unité (14) est équipée de telle façon qu'elle opère quand on insère ou enlève la carte téléphonique (12).

5. Dispositif suivant une des revendications 2 - 4, **caractérisé par le fait que** dans la partie intérieure du boîtier (1) se trouve une unité (15) pour la communication à un module intégré dans la carte téléphonique (12) lorsqu'on positionne la carte téléphonique (12) dans le plan (e).

6. Une carte téléphonique avec un dispositif suivant une des revendications précédentes, **caractérisée par le fait que** la face avant (4) du boîtier est placé de telle sorte que que la carte téléphonique insérée (12) reste bien visible dans le renfoncement (10) même si l'ouverture (7) s'étend sensiblement loin de la hauteur des yeux de l'utilisateur.
